# EUROPÄISCHE PATENTANMELDUNG

(11) **EP 1 552 915 A2**
(43) Veröffentlichungstag der Anmeldung: **13.07.2005**
(21) Anmeldenummer: 04029285.6
(22) Anmeldetag: 10.12.2004
(51) Int. Cl.: B29C 44/32, C08G 18/66

(54) **Polyurethanschaumstoffe zur Rohrdämmung**

(30) Priorität: 07.01.2004 DE 102004001317
(71) Anmelder: BASF AKTIENGESELLSCHAFT, 67056 Ludwigshafen (DE)
(72) Erfinder: Grieser-Schmitz, Christof, 49076 Osnabrück (DE); Ellersiek, Carsten, 49525 Lengerich (DE)

(57) **Zusammenfassung**

Die Erfindung betrifft Polyurethanschaumstoffe, erhältlich durch Umsetzung einer Isocyanatkomponente (a) mit einer Polyolmischung (b), wobei die Polyolmischung Polyole mit einer Hydroxylzahl von größer als 70 mg KOH/g enthält und eine Viskosität weniger als 3000 mPas, gemessen nach DIN 53019 bei 20°C, aufweist, sowie deren Verwendung zur Rohrdämmung. Ferner betrifft die Erfindung gedämmte Rohre, enthaltend die erfindungsgemäßen Polyurethane, sowie ein Verfahren zu deren Herstellung.

## Beschreibung

Die Erfindung betrifft Polyurethanschaumstoffe, erhältlich durch Umsetzung einer Isocyanatkomponente (a) mit einer Polyolmischung (b), wobei die Polyolmischung Polyole mit einer Hydroxylzahl von größer als 70 mg KOH/g enthält und eine Viskosität weniger als 3000 mPas, gemessen nach DIN 53019 bei 20 °C, aufweist, sowie deren Verwendung zur Rohrdämmung. Ferner betrifft die Erfindung gedämmte Rohre, enthaltend die erfindungsgemäßen Polyurethane, sowie ein Verfahren zu deren Herstellung.

Mit Polyurethanschaumstoffen gedämmte Rohre sind im Stand der Technik bekannt und beispielsweise in EP-A-865 893 und DE-A-197 42 012 beschrieben. Gedämmte Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffentechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierbaren Bedingungen in Produktionshallen hergestellt werden. Die Muffenverbindungen werden (oft unter Zeitdruck) bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

In der rohrverarbeitenden Industrie ist es daher erstrebenswert, möglichst wenig Muffenverbindungen, bezogen auf die Länge einer Leitung, zu installieren. Dies wird erreicht durch den Einsatz von längeren Einzelrohrsegmenten, deren Produktion allerdings erhöhte Anforderungen stellt und häufig zu technischen Problemen führt.

Beim Verschäumen der Rohre muss klar zwischen zwei Begrifflichkeiten unterschieden werden. Zuerst spricht man von "Vorverteilung" des noch nicht reagierenden Reaktionsgemisches und anschließend von "Fließen" des aufschäumenden Reaktionsgemisches.

Aufgrund der geforderten technischen Eigenschaften, beispielsweise im Hinblick auf die Druckfestigkeit, werden im Stand der Technik Polyurethansysteme, umfassend hochfunktionelle Polyole mit entsprechend hoher Viskosität eingesetzt. Daraus resultieren Polyolmischungen mit hohen Gesamtviskositäten, die sich zwar durch ein gutes Fließen in Stufe 2, jedoch durch eine schlechte Vorverteilung in Stufe 1 auszeichnen.

Maßgeblich für die Qualität der Rohre ist eine gleichmäßige Rohdichteverteilung des Schaumstoffes, diese ist jedoch bei Einsatz der bisherigen Polyurethansysteme nicht vorteilhaft. Gewöhnlich ergibt sich an den Enden eine niedrigere und in der Mitte des Rohres eine höhere Rohdichte. Je länger das Rohr ist, desto höher wird produktionstechnisch bedingt die erforderliche Gesamtrohdichte des Schaums im Rohrspalt.

Des weiteren ist bei den Systemen des Standes der Technik das Fließvermögen des Schaums begrenzt, so dass nach Erreichen der Abbindezeit der sich überwälzende Schaum zu schlechten Eigenschaften (niedrige Druckfestigkeit, hohe Wasseraufnahme, schlechte Wärmeleitfähigkeit etc.) führt. Diese Schaumstruktur tritt in der Regel an den Rohrenden auf und wird als "Schiebezone" bezeichnet.

Aufgabe der Erfindung war es daher, ein Polyurethansystem bereitzustellen, welches vorteilhaft bei der Herstellung von gedämmten Rohren verwendet werden kann und dort zu einem Polyurethanschaumstoff mit gleichmäßiger Rohdichteverteilung führt. Ferner soll das Auftreten einer "Schiebezone" vermieden werden.

Weiterhin war es Aufgabe der Erfindung, ein Polyurethansystem bereitzustellen, welches es bei der Herstellung von gedämmten Rohren erlaubt, die Gesamteinschussmenge an PUR-Schaum in den Ringspalt aus Kostengründen so gering wie möglich zu halten.

Die Aufgabe konnte durch die Entwicklung von Polyurethansystemen enthaltend Polyole mit einerseits niedriger Gesamtviskosität, die sich neben einem guten Fließverhalten durch eine hervorragende Vorverteilung auszeichnen, und andererseits mit genügend hoher OH-Zahl, um die geforderten physikalischen Eigenschaften zu erfüllen, gelöst werden.

Gegenstand der Erfindung ist daher ein Polyurethansystem, umfassend
a) eine Isocyanatkomponente und
b) eine Polyolmischung, enthaltend
   b1) Polyole, wobei die Komponente (b1) eine Hydroxylzahl von größer als 70 mg KOH/g aufweist,
   b2) gegebenenfalls Katalysatoren und
   b3) gegebenenfalls chemisches Treibmittel,
wobei die Polyolmischung (b) eine Viskosität weniger als 3000 mPas, gemessen nach DIN 53019 bei 20°C, aufweist.

Gegenstand der Erfindung sind ferner auch Polyurethanschaumstoffe, erhältlich durch Umsetzung des erfindungsgemäßen Polyurethansystems, d.h. die Isocyanatkomponente (a) und die Polyolmischung (b) wird durch Vermischung zur Reaktion gebracht.

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.
Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Zur Herstellung von Polyurethan-Hartschaumstoffen wird insbesondere Roh-MDI eingesetzt.

In einer bevorzugten Ausführungsform wird die Isocyanatkomponente (a) so gewählt, dass sie eine Viskosität weniger als 600 mPas, bevorzugt von 100 bis 450, besonders bevorzugt von 120 bis 350, insbesondere von 180 bis 320 mPas, gemessen nach DIN 53019 bei 20°C, aufweist.

Im Stand der Technik ist es gegebenenfalls üblich, Isocyanuratgruppen in das Polyisocyanat einzubauen. Hierfür werden bevorzugt Isocyanuratgruppen bildende Katalysatoren, beispielsweise Alkalimetallsalze alleine oder in Kombination mit tertiären Aminen eingesetzt. Die Isocyanurat-Bildung führt zu flammwidrigen Polyisocyanurat-(PIR)-Schaumstoffen, welche bevorzugt im technischen Hartschaum, beispielsweise im Bauwesen als Dämmplatte oder Sandwichelemente, eingesetzt werden.

Im Rahmen dieser Erfindung ist es bevorzugt, dass die erfindungsgemäßen Polyurethansysteme und Polyurethanschaumstoffe im wesentlichen frei von Isocyanuratgruppen sind. Bevorzugt beträgt im Schaumstoff das Verhältnis Isocyanuratgruppe zu Urethangruppe kleiner als 1:10, besonders bevorzugt kleiner als 1:100. Insbesondere sind im erfindungsgemäßen Polyurethanhartschaumstoff im wesentlichen keine Isocyanuratgruppen vorhanden.

Im erfindungsgemäßen Polyurethansystem enthält die Polyolmischung (b) Polyole als Bestandteil (b1), optional Katalysatoren als Bestandteil (b2) und gegebenenfalls chemische Treibmittel als Bestandteil (b3). Im allgemeinen enthält die Polyolmischung (b) keine physikalischen Treibmittel. In diesem Fall ist es ein wesentlicher Punkt der Erfindung, dass die Polyolmischung (b) eine Viskosität weniger als 3000 mPas, bevorzugt weniger als 2400 mPas, mehr bevorzugt weniger als 2200 mPas, besonders bevorzugt weniger als 1900 mPas, gemessen nach DIN 53019 bei 20°C, aufweist. Als Untergrenze der Viskosität haben sich Werte von 200 mPas, bevorzugt 400 mPas, besonders bevorzugt 600 mPas, gemessen nach DIN 53019 bei 20°C, als sinnvoll erwiesen.

Es ist grundsätzlich auch möglich, der Polyolmischung physikalische Treibmittel hinzufügen. Die Zugabe von physikalischem Treibmittel führt jedoch zu einer signifikanten Absenkung der Viskosität. Daher ist es ein wesentlicher Punkt der Erfindung, dass die oben gemachten Angaben zur Viskosität der Polyolmischung (b), auch für den Fall, dass sie physikalische Treibmittel enthält, sich auf die Viskosität der Polyolmischung (b) ohne Zusatz von physikalischen Treibmitteln beziehen.

Als Polyole (Bestandteil b1) kommen im allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im allgemeinen 1,9 bis 8, bevorzugt 2,4 bis 7, besonders bevorzugt 2,9 bis 6.

Die Polyole (b1) weisen eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im allgemeinen 1000 mg KOH/g, bevorzugt 900 mg KOH/g, besonders 800 mg KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül TMP und TDA verwendet.

Die Polyolmischung kann optional als Bestandteil (b2) Katalysatoren enthalten. Als Katalysatoren (b2) werden üblicherweise Verbindungen verwendet, welche die Reaktion der Hydroxylgruppen enthaltenden Verbindungen der Komponenten (b) mit den Isocyanatgruppen beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im allgemeinen in einer Menge von 0,001 bis 5 Gew.-%, insbesondere von 0,05 bis 2,5 Gew.-% Katalysator, bezogen auf das Gewicht der Komponente (b), eingesetzt.

Die Polyolmischung kann ferner optional als Bestandteil (b3) chemische Treibmittel enthalten. Als chemische Treibmittel sind Wasser oder Carbonsäuren, insbesondere Ameisensäure als chemisches Treibmittel bevorzugt. Das chemische Treibmittel wird im allgemeinen in einer Menge von 0,1 bis 5 Gew.-%, insbesondere von 1,0 bis 3,0 Gew.-%, bezogen auf das Gewicht der Komponente (b), eingesetzt.

Wie vorstehend erwähnt kann die Polyolmischung physikalisches Treibmittel enthalten. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten b) eingesetzt.

In einer bevorzugten Ausführungsform enthält die Polyolmischung (b) als Bestandteil (b4) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer werden im allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel werden im allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel), eingesetzt.

Die Komponenten (b4) und (b5) können in der Polyolmischung einzeln oder in Kombination eingesetzt werden.

Durch Umsetzung des erfindungsgemäßen Polyurethansystems sind die erfindungsgemäßen Polyurethanschaumstoffe erhältlich. Bei der Umsetzung werden die Polyisocyanate (a) und die Polyolmischung (b) im allgemeinen in solchen Mengen zur Umsetzung gebracht, dass die Isocyanat-Kennzahl des Schaums 90 bis 250, bevorzugt 100 bis 180, mehr bevorzugt 110 bis 149 beträgt.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,2 N/mm², bevorzugt größer 0,25 N/mm², besonders bevorzugt größer 0,3 N/mm², gemessen nach DIN 53421, aufweist.

Dem erfindungsgemäßen Polyurethansystem können gegebenenfalls auch noch Zusatzstoffe (b6) einverleibt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen erfindungswesentlichen Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel) beziehen.

Die erfindungsgemäßen Polyurethansysteme finden bevorzugt zur Herstellung von gedämmten Rohren, beispielsweise von Fernwärmerohren, Anwendung. Gegenstand der Erfindung ist somit die Verwendung des erfindungsgemäßen Polyurethansystems zur Herstellung von gedämmten Rohren.

In einer bevorzugten Ausführungsform wird das erfindungsgemäße Polyurethansystem zur Herstellung von gedämmten Verbundmantelrohre für erdverlegte Fernwärmenetze gemäß DIN EN 253 verwendet.

Weiterhin ist Gegenstand der Erfindung ein gedämmtes Rohr, aufgebaut aus
i) einem Mediumrohr
ii) einer Schicht aus Dämmmaterial, enthaltend den erfindungsgemäßen Polyurethanschaumstoff, und
iii) einem Mantelrohr.

Bei dem Mediumrohr (i) handelt es sich im allgemeinen um ein Stahlrohr mit einem Außendurchmesser von 1 bis 120 cm, bevorzugt 4 bis 110 cm und einer Länge von 1 bis 24 Meter, bevorzugt 6 bis 16 Meter.

Auf der Außenseite des Mediumrohres angeordnet ist eine Schicht aus Dämmmaterial (ii), enthaltend den erfindungsgemäßen Polyurethanschaumstoff. Diese Schicht weist im allgemeinen eine Dicke von 1 bis 10 cm, bevorzugt 2 bis 5 cm auf.

In einer bevorzugten Ausführungsform weist die Schicht aus Dämmmaterial eine Gesamtrohdichte von unter 90 kg/m³, bevorzugt von 70 bis 87 kg/m³ auf. Unter Gesamtrohdichte ist hier die Rohdichteverteilung über den Rohrquerschnitt und die Rohrlänge gemeint.

In einer weiteren bevorzugten Ausführungsform weist die Schicht aus Dämmmaterial (ii), enthaltend den erfindungsgemäßen Polyurethanschaumstoff eine Wärmeleitfähigkeit von weniger als 27 mW/mK, bevorzugt von 22 bis 26,9, gemessen nach EN ISO 8497 auf.

Das Mantelrohr (iii) umgibt die Schicht aus Dämmmaterial und besteht im allgemeinen aus Kunststoff, beispielsweise aus Polyethylen, und weist üblicherweise eine Dicke von 1 bis 30 mm auf. Der Innendurchmesser des Mantelrohrs beträgt im allgemeinen 6 bis 140 cm, bevorzugt 10 bis 120 cm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält. Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr für erdverlegte Fernwärmenetze, welches die Anforderungen von DIN EN 253 erfüllt.

Schließlich ist Gegenstand der Erfindung ein Verfahren zur Herstellung der erfindungsgemäßen gedämmten Rohre, umfassend die Schritte:
1) Bereitstellen des Mediumrohres und des Mantelrohres, wobei das Mediumrohr innerhalb des Mantelrohrs angeordnet ist, beispielsweise mittels Abstandhalter,
2) Einfüllen von erfindungsgemäßem Polyurethansystem in den Raum zwischen Mediumrohr und Mantelrohr,
3) Aufschäumen und Aushärten lassen des Polyurethan-Umsetzungsgemisches.

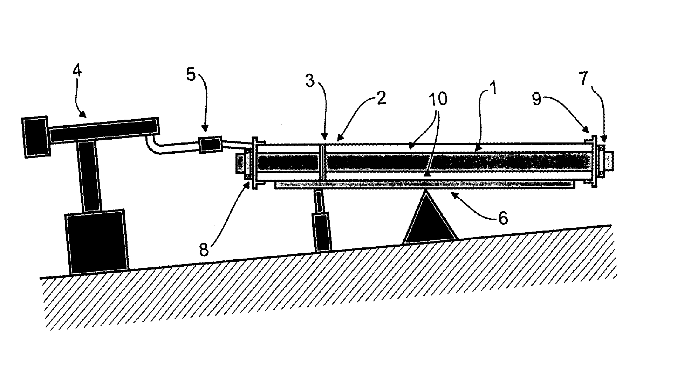

Das erfindungsgemäße Verfahren wird anhand von Figur 1 veranschaulicht. In Figur 1 bedeutet:
1 Mediumrohr
2 Mantelrohr
3 Abstandhalter
4 PUR-Schäumanlage
5 Mischkopf
6 neigbarer Schäumtisch
7 Schelle
8 Dichtung
9 Endkappe mit Entlüftungslöchern
10 Ringspalt

In einem Verfahren gemäß Figur 1 handelt es sich um ein diskontinuierliches Verfahren. Im Rahmen dieses Verfahrens wird das Mediumrohr 1 (in der Regel Stahl) mit sternförmigen Abstandshaltern 3 versehen, die der Zentrierung des inneren Rohres 2 dienen. Das Mediumrohr 1 wird in das äußere Mantelrohr 3 geschoben (in der Regel Polyethylen), so dass sich ein Ringspalt 10 zwischen beiden Rohren ergibt. Dieser Ringspalt wird aufgrund seiner guten Dämmeigenschaften mit Polyurethanschaumstoff gefüllt.

Hierfür wird das üblicherweise mittels neigbarem Schäumtisch 6 leicht geneigte Doppelrohr, bevorzugt geneigt in einem Winkel von 1 ° bis 10 °, bevorzugt 1,5 ° bis 7 °, mit Abschlusskappen 9 versehen, die mit Entlüftungslöchern ausgestattet sind. Anschließend wird in den Ringspalt mittels einer Polyurethandosiermaschine 4 das flüssige Reaktionsgemisch, d.h. das erfindungsgemäße Polyurethansystem, eingefüllt welches in noch flüssiger Form im Rohrspalt hinunter fließt bis die Schaumbildungs-Reaktion einsetzt. Ab diesem Zeitpunkt findet die weitere Verteilung durch Fließen des langsam in der Viskosität ansteigenden Schaums statt, bis das Material ausreagiert ist.

In einer üblichen Ausführungsform wird das PUR-System im Rohr stark verdichtet, so dass ohne Schellen 7 die Endkappen 9 weggedrückt würden. Ohne Dichtung 8 würde Material zwischen Mediumrohr 1 und Endkappe 9 herausgedrückt. Die Entlüftungslöcher der Endkappen werden bei beginnendem Schaumaustritt mit Stopfen oder automatischen Ventilen verschlossen.

Der Einsatz des erfindungsgemäßen Polyurethansystems führt im erfindungsgemäßen Verfahren zur Herstellung gedämmter Rohre zu folgenden Vorteilen:
1. Vereinfachte Produktion von längeren Rohrsegmenten
2. Abgesenkte Gesamtrohdichte
3. Bessere Rohdichteverteilung
4. Niedrigere Wärmeleitfähigkeit
5. Erhöhte Produktivität durch geringere Aushärtezeiten
6. Bessere maschinentechnische Verarbeitbarkeit

## Patentansprüche

1. Polyurethansystem, umfassend
a) eine Isocyanatkomponente und
b) eine Polyolmischung, enthaltend
b1) Polyole, wobei die Komponente (b1) eine Hydroxylzahl von größer als 70 mg KOH/g aufweist,
b2) gegebenenfalls Katalysatoren und
b3) gegebenenfalls chemisches Treibmittel,
wobei die Polyolmischung (b) eine Viskosität weniger als 3000 mPas, gemessen nach DIN 53019 bei 20°C, aufweist.

2. Polyurethansystem nach Anspruch 1, **dadurch gekennzeichnet, dass** die Polyolmischung (b) zusätzlich als Komponente
b4) Vernetzer und/oder
b5) Kettenverlängerungsmittel und
b6) gegebenenfalls Zusatzstoffe
enthält.

3. Polyurethansystem nach Anspruch 1 oder 2, **dadurch gekennzeichnet, dass** Polyisocyanate (a) und die Polyolmischung (b) im allgemeinen in solchen Mengen zur Umsetzung gebracht werden, dass die Isocyanat-Kennzahl des Schaums 90 bis 149 beträgt.

4. Polyurethansystem nach einem der Ansprüche 1 bis 3, **dadurch gekennzeichnet, dass** die Komponenten a) eine Viskosität weniger als 600 mPas, gemessen nach DIN 53019 bei 20°C, aufweist.

5. Polyurethanschaumstoff, erhältlich durch Umsetzung eines Polyurethansystems gemäß einem der Ansprüche 1 bis 4.

6. Polyurethanschaumstoff, **dadurch gekennzeichnet, dass** die Komponenten a) und b) des Polyurethansystems so gewählt werden, dass der resultierende Schaumstoff eine Druckfestigkeit von größer 0,2 N/m², gemessen nach DIN 53421 aufweist.

7. Verwendung eines Polyurethansystems nach einem der Ansprüche 1 bis 4 zur Herstellung von gedämmten Rohren.

8. Verwendung nach Anspruch 7, **dadurch gekennzeichnet, dass** es sich um gedämmte Verbundmantelrohre für erdverlegte Fernwärmenetze gemäß DIN EN 253 handelt.

9. Gedämmtes Rohr, aufgebaut aus
i) einem Mediumrohr
ii) einer Schicht aus Dämmmaterial, enthaltend eine Polyurethanschaumstoff gemäß Anspruch 5 oder 6, und
iii) einem Mantelrohr.

10. Verfahren zur Herstellung von gedämmten Rohren, umfassend die Schritte:
1) Bereitstellen des Mediumrohres und des Mantelrohres, wobei das Mediumrohr innerhalb des Mantelrohrs angeordnet ist,
2) Einfüllen von eines Polyurethansystems gemäß einem der Ansprüche 1 bis 4 in den Raum zwischen Mediumrohr und Mantelrohr,
3) Aufschäumen und Aushärten lassen des Polyurethan-Umsetzungsgemisches.
